Europäisches Patentamt

European Patent Office

Office européen des brevets

(19)

(11) Numéro de publication: **0 458 065 A2**

(12) **DEMANDE DE BREVET EUROPEEN**

(21) Numéro de dépôt: 91106281.8

(22) Date de dépôt: 19.04.91

(51) Int. Cl.5: **B26D 7/18**, B23D 35/00

(30) Priorité: 26.04.90 CH 1418/90

(43) Date de publication de la demande:
27.11.91 Bulletin 91/48

(84) Etats contractants désignés:
AT BE DE DK ES FR GB IT LU NL SE

(71) Demandeur: BOBST S.A.
Case Postale
CH-1001 Lausanne(CH)

(72) Inventeur: **de Dompierre, Jean-Bernard**
**Chemin de la Gravière 2**
**CH-1026 Echandens(CH)**

(74) Mandataire: **Colomb, Claude**
**BOBST S.A., Service des Brevets, Case**
**Postale**
**CH-1001 Lausanne(CH)**

(54) **Table pour la préparation d'outils de séparation des poses dans une machine de découpage de feuilles pour la production d'emballages.**

(57) L'invention concerne une table (T) destinée à faciliter la préparation et le changement d'outils supérieurs (S₁; S'₁) et inférieur (S₂; S'₂) d'une station de séparation de poses dans une machine de production d'emballages. Dans ce but, la table (T) est pivotable autour d'un axe horizontal (A₁) et peut recevoir deux paires d'outil (S₁ et S₂, respectivement S'₁, S'₂). Lorsqu'une paire d'outils (S₁, S₂) a été mise en travail dans la station (S), l'autre paire (S'₁, S'₂) peut être préparée sur la table (T) pour un travail suivant. Les deux outils (S'₁ S'₂) d'une même paire sont disposés sur la table (T) de manière que l'outil inférieur (S'₂), après sa préparation, peut servir de référence pour le positionnement des poinçons (P') de séparation des poses à monter sur l'outil supérieur (S'₁).

Fig. 1

La présente invention concerne un dispositif destiné à la séparation des poses dans une machine de travail d'éléments en plaque ou feuilles en vue de la production d'emballages.

La production d'emballages passe par trois étapes successives :

- impression sur une feuille d'un grand nombre de motifs (ou figures) dont chacun est relatif à un seul emballage;
- découpage de la feuille en différentes poses (ou flancs) dont chacune comprend un seul motif imprimé; et
- pliage-collage de chaque pose en vue de former un emballage à l'état plié.

Après le découpage, pour que toute la feuille découpée puisse être transférée (en principe au moyen d'une barre à pinces montée sur un train de chaînes) aux stations suivantes d'éjection de déchets (constitués par des zones de la feuille situées entre chaque pose et exclues de l'emballage final) et de réception de la feuille, toutes les posez d'une même feuilles sont encore maintenues ensemble au moyen de petits points d'attache qui correspondent à de très petites encoches (non coupantes) réalisées dans les filets coupeurs de la presse.

A la station de réception, suivant les besoins, il doit pouvoir être possible :

- soit de former une pile de feuilles composées chacune de toutes ses poses réunies entre elles par les points d'attache;
- soit de former simultanément plusieurs piles de poses qui ont été séparées entre elles par ruptures des points d'attache dans une station antérieure dite de séparation des poses.

Il est connu d'utiliser, dans la station de séparation des poses, un outil supérieur mobile et un outil inférieur fixe. L'outil supérieur est constitué par un ensemble de poinçons, et l'outil inférieur Par une matrice à ouvertures, les poinçons supérieurs mobiles forçant les poses au travers des ouvertures de la matrice inférieure en provoquant la rupture des différents points d'attache qui reliaient soit chacune des poses entre elles, soit les poses marginales à un déchet périphérique de la feuille. Les outils de séparation doivent donc être adaptés à la forme et à la disposition des poses de chaque nouvelle série de feuilles à travailler. En général, les poinçons sont montés, en repérage par rapport aux lignes de découpage de la presse, sur une plaque de base fixée à un cadre porte-outil mobile supérieur de la station de séparation des poses. Au-dessous et en regard de chaque poinçon, se trouve une ouverture ou maille correspondante de la matrice inférieure constituée de barrettes. Les barrettes sont arrangées de façon à se chevaucher pour former une grille ou matrice dont les mailles ont approximativement les dimensions des poses à séparer.

Pour éviter qu'il soit nécessaire de fabriquer de nouveaux outils de séparation des poses pour chaque nouvelle série de feuilles, il a été proposé, dans le brevet CH-A-617886, de monter les poinçons horizontalement déplaçables le long de barres fixées sur un cadre verticalement mobile.

La matrice inférieure est composée de barres croisées déplaçables de manière à former une grille dont les mailles sont de dimensions réglables. Pour sa préparation, l'outil inférieur est placé à plat au-dessus d'une table recouverte d'une feuille munie d'une empreinte en correspondance avec les découpes de la feuille. Les barres sont ensuite placées en référence à l'empreinte. La préparation de l'outil supérieur est à peu près similaire, avec cette différence que non seulement ses barres mais aussi les poinçons peuvent être déplacés le long des barres en fonction de l'empreinte. Toutefois un tel mode de préparation de l'outil supérieur n'est pas possible dans le cas où ce dernier se présente sous la forme d'une planche munie de perforations d'échappement d'air et contre la face inférieure de laquelle sont fixés de façon amovible les poinçons; en effet, il n'est pas possible de percevoir distinctement l'empreinte au travers des perforations de la planche. Or, de telles planches sont toujours plus utilisées.

De plus, pour diminuer au maximum les arrêts de production de la machine, il est connu de préparer sur une première table les outils supérieur et inférieur pour un travail suivant. A l'instant du changement d'outils, les anciens outils sont glissés hors de la machine sur une seconde table. Ensuite, la première table est mise à la place de la seconde table pour pouvoir glisser les nouveaux outils dans la machine. Cette substitution d'une table par l'autre est malaisée et augmente inutilement le temps d'arrêt. De plus le stockage de ces deux tables exige de l'espace à disposition.

La présente invention a donc pour but de réaliser un dispositif qui élimine les inconvénients mentionnés ci-dessus.

Ce but est atteint grâce à un dispositif selon la revendication 1.

D'autres caractéristiques et avantages de l'invention ressortiront du mode de réalisation de l'invention décrit ci-après en vue d'en faciliter la compréhension et en référence au dessin annexé dans lequel :

- la figure 1 est une vue de côté d'une table selon l'invention installée devant une station de séparation des poses;
- la figure 2 est une vue en coupe selon A - A de la figure 1;
- la figure 3 est une vue selon B (et en coupe partielle selon C - C) de la figure 2;

- les figures 4 et 5 sont des vues partielles de la table;
- les figures 6 et 7 sont des vues partielles en coupe d'un outil supérieur.

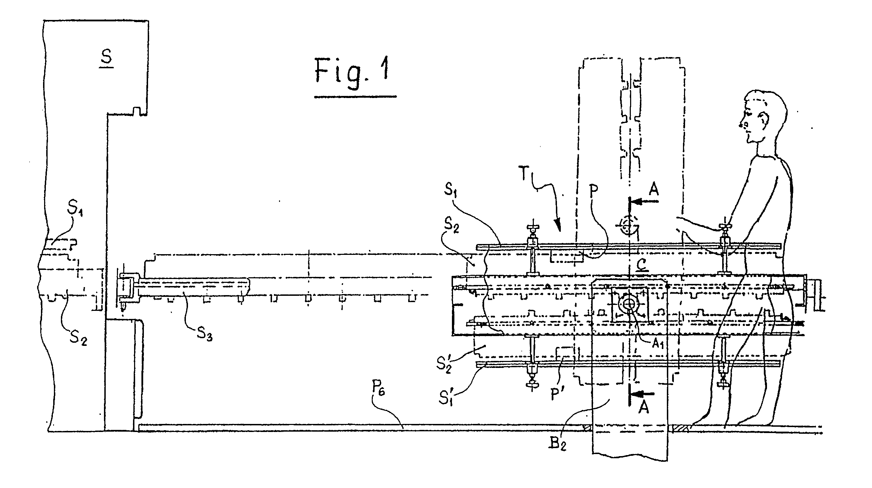

La figure 1 montre une vue partielle transversale d'une station S de séparation des poses faisant suite à une station de séparation des déchets d'une machine de découpage. Dans la station S sont prévus des supports sous forme de guidage pour recevoir une paire d'outils supérieur $S_1$ et inférieur $S_2$ (représenté en traits discontinus). Pour leur montage/démontage, les outils $S_1$, $S_2$ sont glissés à plat dans/hors de la station S. Pour faciliter le montage/démontage de l'outil inférieur $S_2$, relativement lourd, la station est munie de guidage extérieurs escamotables $S_3$.

Devant la station S se trouve une table de préparation T pouvant supporter deux paires d'outils $S_1$, $S_2$, respectivement $S'_1$, $S'_2$. La table T est montée pivotable, autour d'un axe horizontal $A_1$, sur deux supports verticaux $B_1$, $B_2$ (un seul $B_2$ est visible dans la figure 1) émergeant d'un podium $P_6$ prévu pour l'opérateur. L'axe $A_1$ est perpendiculaire à la direction d'introduction des outils $S_2$, $S_2$ dans la machine.

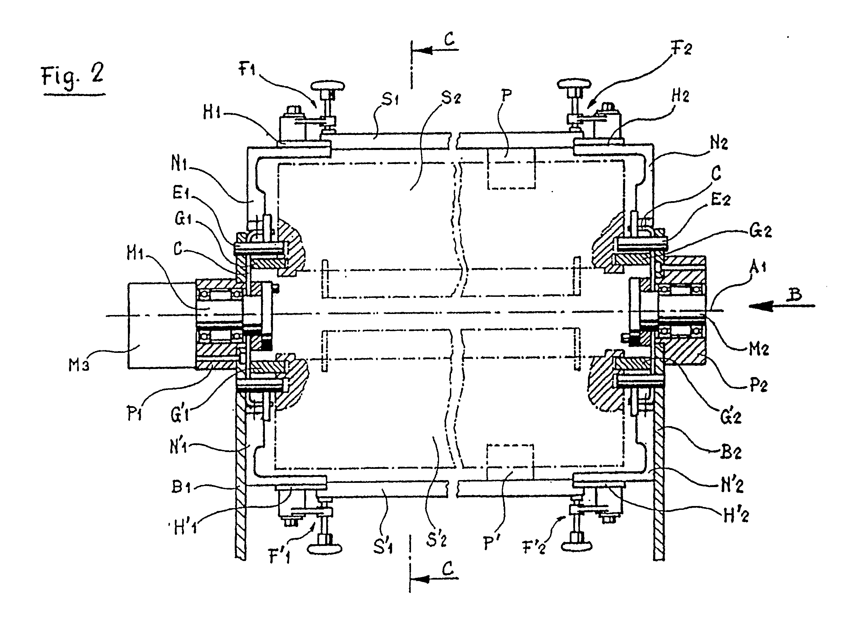

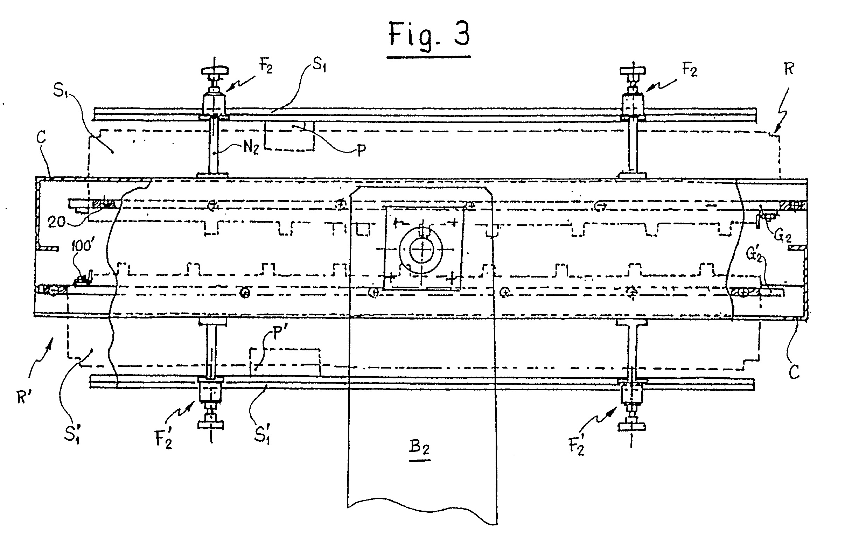

La table T (voir figures 2 et 3) est constituée d'un cadre rectangulaire horizontal C. Sur le milieu de deux côtés opposés du cadre C sont fixés deux courts moyeux $M_1$, $M_2$ destinés à former l'axe de pivotement $A_1$ du cadre C. Les moyeux $M_1$, $M_2$ sont montés en rotation libre dans des paliers à roulements $P_1$, $P_2$ prévus à l'extrémité supérieure des deux supports verticaux $B_1$, $B_2$. Par entraînement en rotation d'un moyeu $M_1$ par un moteur $M_3$, la table T pivote donc autour de l'axe $A_1$. La suite de la description sera faite en référence à une position horizontale du cadre C.

Sur chacun des deux côtés du cadre C qui sont perpendiculaires à l'axe $A_1$ (c'est-à-dire sur les côtés sur lesquels sont prévus les moyeux $M_1$, $M_2$) sont fixés deux rails horizontaux de guidage $G_1$, $G_2$ sur lesquels il est possible de glisser un outil inférieur $S_2$ (représenté par son pourtour en traits mixtes dans les figures 2 et 3). Deux ergots déplaçables $E_1$, $E_2$ montés sur les guidages $G_1$, $G_2$ et pouvant venir en prise avec des ouvertures correspondantes de l'outil $S_2$, permettent le verrouillage en position de ce dernier.

Sur le bord supérieur de chacun des deux côtés du cadre C qui sont munis de guidages $G_1$, $G_2$, sont fixés deux montants verticaux $N_1$, respectivement $N_2$ émergeant vers le haut. Sur les extrémités supérieures de chaque paire de montants $N_1$, respectivement $N_2$, est monté un support horizontal $H_1$, respectivement $H_2$, pour un outil supérieur $S_1$. L'agencement est tel que la disposition de l'outil supérieur $S_1$ par rapport à l'outil inférieur $S_2$ est similaire à celle de leur utilisation dans la machine.

La table T est aussi prévue pour recevoir une seconde paire d'outils supérieur $S'_1$ et inférieur $S'_2$ dont les faces respectives sont parallèles et de sens opposé à celles correspondantes de la première paire $S_1$, $S_2$. Dans ce but, la table T possède, vue selon la figure 2, une seconde partie inférieure identique et symétrique, par rapport à l'axe $A_1$, à la première partie décrite ci-dessus. Par la suite, les signes de référence relatifs aux éléments de cette seconde partie seront les mêmes que ceux utilisés pour leur correspondant dans la première partie mais complétés par l'indice '.

Ainsi donc, lorsque le cadre C est en position horizontale, les outils $S_1$, $S_2$ de la paire supérieure sont orientés dans une position qui correspond à celle de leur position de travail, c'est-à-dire dans laquelle des poinçons P (un seul est représenté) de séparation de poses montés contre la face inférieure de l'outil supérieur $S_1$ s'étendent vers le bas en direction et au travers (c'est-à-dire entre les barres) de l'outil inférieur $S_2$; par contre, les poinçons P' de l'outil supérieur $S'_1$ de la paire inférieure s'étendent vers le haut. Vue selon la figure 3, la table T possède deux parties supérieure et inférieure symétriques mais qui diffèrent par le fait que la cadre C possède une ouverture R située à droite pour le passage de l'outil inférieur $S_2$ de la paire supérieure et une ouverture R' située à gauche pour l'outil inférieur $S'_2$ de la paire inférieure.

Les guidages $G_1$, $G'_1$, $G_2$, $G'_2$ sont munis de billes 20 pour faciliter le déplacement des outils inférieurs $S_2$, $S'_2$.

L'utilisation de la table T s'effectue de la manière suivante. En cours de production, seule, par exemple, la paire inférieure d'outils $S'_1$, $S'_2$ est sur la table T, l'autre paire $S_1$, $S_2$ étant dans la machine. En vue de préparer les outils $S'_1$, $S'_2$ pour un nouveau travail, le cadre C est tourné de 180° de manière à amener les outils $S'_1$, $S'_2$ en position supérieure. L'outil supérieur $S'_1$ ayant été enlevé, il est alors possible de préparer de manière connue l'outil inférieur $S'_2$. Quand l'outil inférieur $S'_2$ est prêt, l'outil supérieur $S'_1$ sans poinçons P' est à nouveau mis en place sur les barres $H_1$, $H_2$. Ensuite le cadre C est tourné de 180°, position dans laquelle il est possible d'introduire les poinçons P' par le dessus et au travers des ouvertures de l'outil inférieur $S'_2$ pour les mettre en place sur l'outil supérieur $S'_1$ qui est alors en position renversée par rapport à celle de son utilisation réelle dans la machine. Dans cette position, il est donc aisé de positionner les poinçons P' par rapport aux barres de l'outil inférieur $S'_2$, lui aussi en position inversée. La nouvelle paire d'outils $S'_1$, $S'_2$ est alors prête à être transférée dans la machine. Pour cela, la table est mise de niveau, à l'aide des supports $B_1$, $B_2$ déplaçables verticalement (par des moyens non représentés), par rapport à la hauteur de sortie de l'outil inférieur $S_2$ présent dans la machine. L'outil inférieur $S_2$ est alors glissé horizontalement hors de la machine et mis en place sur la table, l'outil inférieur $S_2$ pénétrant dans le cadre C au travers de l'ouverture R. Le cadre C est alors tourné de 180° de manière que les nouveaux outils $S'_1$, $S'_2$ puissent être glissés dans la machine, l'outil inférieur $S'_2$ étant extrait du cadre C au travers de l'ouverture R'.

Il est alors possible de remettre la machine en production et de préparer les outils sortis $S_1$, $S_2$ pour un nouveau travail.

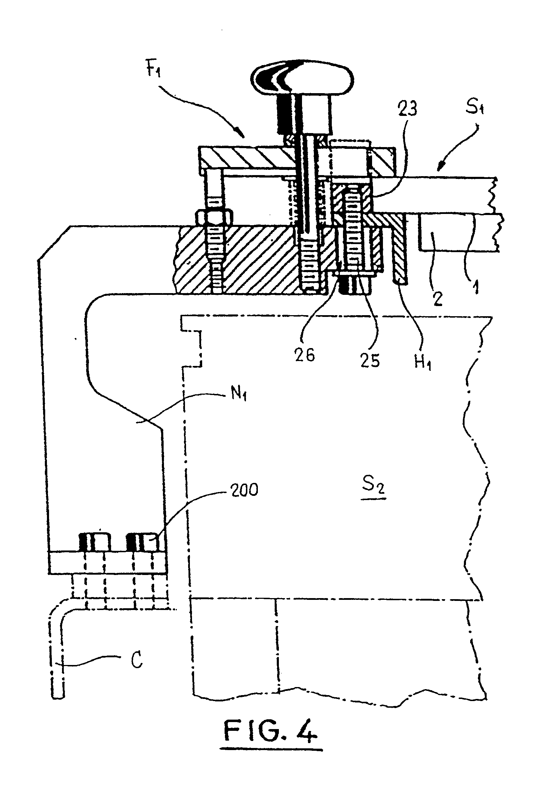

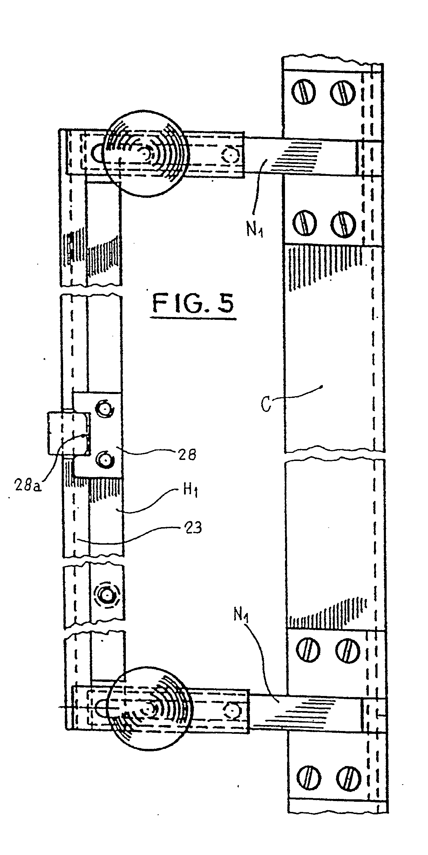

La figure 4 est une vue de côté d'un des montants verticaux $N_1$ (ou $N_2$) avec un mode de réalisation des moyens de verrouillage $F_1$ (ou $F_2$). La base du montant $N_1$ est fixée par des vis 200 au cadre C. Le montant $N_1$ possède, à son extrémité supérieure, une extension horizontale sur laquelle est fixée, de manière réglable, à l'aide d'une vis 25 et d'un trou oblong 26, la barre $H_1$ et aussi une seconde barre 23, le bord correspondant de l'outil $S_1$ étant en contact avec la seconde barre 23. Un dispositif à vis pour serrage manuel $F_1$ permet de bloquer définitivement l'outil $S_1$ contre les deux barres $H_1$ et 23. Sur le milieu de la barre $H_1$ est fixée, à l'aide de vis (non visibles) une plaquette 28 (voir figure 5 qui est une vue de dessus de la figure 4) munie d'une encoche 28a destinée à venir en prise avec une plaquette de centrage (non représentée) prévue sur l'outil $S_1$.

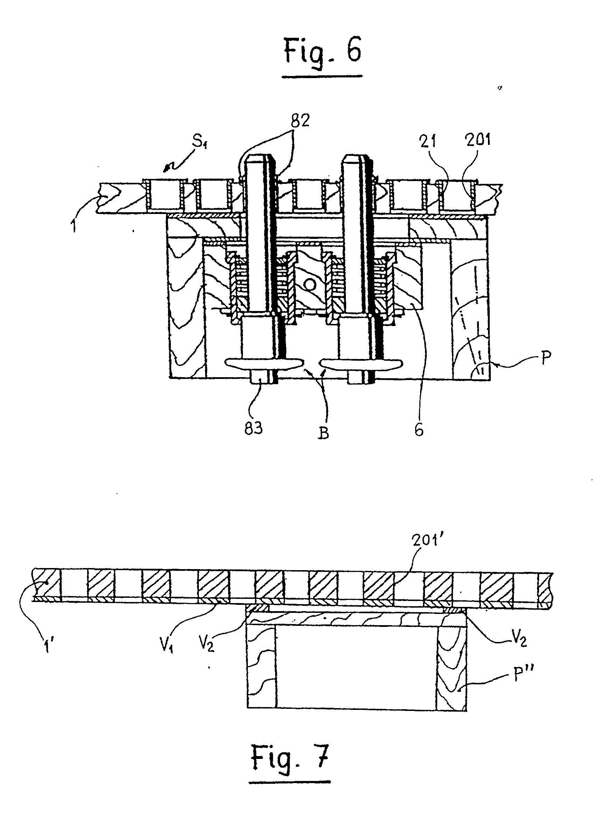

La figure 6 montre un exemple d'outil supérieur $S_1$ constitué d'une planche en bois 1 quadrillée sur toute sa surface de trous 201 dans lesquels sont mis à la presse des douilles 21. Contre la face inférieure de la planche sont fixées des poinçons P de forme rectangulaire et creux. A l'intérieur du poinçon P est introduit un bloc rectangulaire de fixation muni de deux broches auto-bloquantes dont les tiges 81 sont en prise avec les douilles 21. Par action sur la tige centrale 83, il est possible d'agir sur des billes 82 qui assurent le verrouillage de la broche B dans la douille 21.

Dans un autre mode de réalisation d'outil supérieur (voir figure 7), les poinçons creux rectangulaires P'' sont fixés sur une planche 1' ajourée par deux couches VECRLO $V_1$, $V_2$ dont l'une $V_1$ est prévue sur à peu près toute la surface inférieure de la plaque 1' et dont l'autre $V_2$ est prévue sur au moins une partie de la face supérieure des poinçons P'. Pour faciliter l'accrochage des deux couches VELCRO $V_1$, $V_2$, il est préférable que la couche $V_2$ se présente sous la forme d'étroites bandes placées à proximité des deux bords extrêmes opposés de chaque poinçon P'.

Il est aisé de voir que les deux modes de réalisation de fixation rapide à broches B ou à VELCRO $V_1$, $V_2$ sont spécialement adaptés dans le cas de l'utilisation de la table de préparation d'outils décrite ci-dessus; en effet, ces moyens de fixation ne gênent pas la pénétration des poinçons P, P' au travers des ouvertures de l'outil inférieur $S_2$, $S'_2$. De plus, toute la mise en place des poinçons P, P' peut s'effectuer à partir d'un seul côté de l'outil $S_1$, $S'_1$, c'est-à-dire qu'il n'est pas nécessaire d'avoir simultanément accès à l'autre côté pour verrouiller en position les fixations de poinçons, comme cela est le cas avec un outil supérieur tel que décrit dans le brevet CH-A-617886 mentionné plus haut. Les fixations à broches B ou à VELCRO permettent une préparation de l'outil supérieur $S_1$ même lorsque la table T est verticale, comme cela est représenté dans la figure 1.

## Revendications

1. Table pour la préparation de paire d'outils universels de séparation de poses dans une machine de découpage d'éléments en forme de feuille ou de bande en vue de la production d'emballages et dans laquelle des poinçons (P; P') d'un outil supérieur mobile ($S_1$; $S'_1$) poussent les poses au travers d'ouvertures correspondantes d'un outil inférieur ($S_2$; $S'_2$), caractérisée en ce qu'elle comprend un premier groupe de supports ($G_1$, $G_2$, $H_1$, $H_2$) pour une première paire d'outils ($S_1$, $S_2$) et un second groupe de supports ($G'_1$, $G'_2$, $H'_1$, $H'_2$) pour une seconde paire d'outils ($S'_1$, $S'_2$), les deux outils d'une même paire ($S_1$ et $S_2$, respectivement $S'_1$ et $S'_2$) étant disposés l'un par rapport à l'autre de manière similaire à celle de travail dans la machine, et la table (T) étant déplaçable entre une première position où au moins un outil inférieur ($S_2$; $S'_2$) peut être transféré horizontalement de la table (T) dans la machine, ou inversément, et une seconde position dans laquelle un opérateur peut placer les poinçons (P; P') sur l'outil supérieur ($S_1$; $S'_1$) en les passant au travers des ouvertures de l'outil inférieur ($S_2$; $S'_2$) déjà préparé antérieurement et qui lui sert de référence pour le positionnement des poinçons (P; P') sur l'outil supérieur ($S_1$; $S'_1$).

2. Table selon la revendication 1, caractérisée en ce qu'elle comprend un cadre rectangulaire (C) pivotable, autour d'un axe horizontal ($A_1$) perpendiculaire à la direction de transfert des outils dans ou hors de la machine, de ladite première à ladite seconde position, ou inversément, le cadre (C) étant muni, d'une part, de guidages ($G_1$, $G_2$; $G'_1$, $G'_2$) orientés perpendiculairement à l'axe de pivotement ($A_1$) et destinés à recevoir les deux outils inférieurs ($S_2$; $S'_2$) et, d'autre part, de montants ($N_1$, $N_2$; $N'_1$,

N'₂) émergeant des deux côtés du cadre (C) et destinés à recevoir deux outils supérieurs (S₁; S'₁), les faces respectives des outils (S₁, S₂) de la première paire étant essentiellement orientées dans une direction opposée à celle des faces correspondantes des outils (S'₁, S'₂) de la seconde paire.

3. Table selon la revendication 2, caractérisée en ce qu'elle est agencée de manière à ce que le transfert d'outils dans ou hors de la machine peut être réalisé en position horizontale du cadre (C).

4. Utilisation d'une table selon l'une des revendications précédentes, dans laquelle l'outil supérieur (S₁; S'₁) comprend une plaque (1) contre la face inférieure de laquelle sont montés les poinçons (P; P'), caractérisée en ce que les poinçons (P; P') sont montés sur la plaque (1) de façon amovible et à l'aide de moyens à fixation rapide (B; V₁, V₂).

5. Utilisation selon la revendication 4, caractérisée en ce que les moyens à fixation rapide comprennent une broche auto-bloquante (B).

6. Utilisation selon la revendication 4, caractérisée en ce que les moyens à fixation rapide comprennent des bandes VELCRO (V₁, V₂).

Fig. 1

Fig. 2

# Fig. 3

EP 0 458 065 A2

FIG. 4

FIG. 5

$N_1$

C

28

28a

$H_1$

23

$N_1$

Fig. 6

Fig. 7

11